# EUROPÄISCHE PATENTSCHRIFT

(11) **EP 1 265 097 B1**
(45) Veröffentlichungstag und Bekanntmachung des Hinweises auf die Patenterteilung: **08.10.2008**
(21) Anmeldenummer: 02011969.9
(22) Anmeldetag: 29.05.2002
(51) Int. Cl.: G02F 1/1347

(54) **Verfahren zum Steuern einer Flüssigkristallanzeige**
Method of controlling a liquid crystal display
Procédé de contrôle d'un affichage à cristaux liquides

(30) Priorität: 07.06.2001 DE 10127492
(43) Veröffentlichungstag der Anmeldung: 11.12.2002
(73) Patentinhaber: Continental Automotive GmbH, 30165 Hannover (DE)
(72) Erfinder: Brandt, Peter, 63739 Aschaffenburg (DE); Friepes, Gerhard, 61231 Bad Nauheim (DE); Simon, Ernst-Ulrich, 61440 Oberursel/Ts. (DE)

(56) Entgegenhaltungen:
- DE-A- 4 028 107
- US-A- 5 136 406
- US-A- 5 680 184

## Beschreibung

Die Erfindung betrifft ein Verfahren zum Steuern einer Flüssigkristallanzeige, insbesondere in einem Kraftfahrzeug, mit zwei räumlich hintereinander angeordneten aktiven Flüssigkristallzellen, welche mit Durchlicht beleuchtet sind.

Flüssigkristallanzeigen der vorstehenden Art sind als DSTN-Displays bekannt. Üblicherweise wird dabei in einer Flüssigkristallzelle eine Dotmatrix dargestellt, während in der zweiten Flüssigkristallzelle Segmente angezeigt werden, die sich in der ersten Zelle wegen der geringen Auflösung nur schwer darstellen lassen. Solche Flüssigkristallanzeigen werden derart angesteuert, dass die jeweils passive Flüssigkristallzelle die Farbverschiebung durch die jeweils selektierte aktive Flüssigkristallzelle kompensiert.

Oftmals ist es wünschenswert, dass auf einer Flüssigkristallanzeige Informationen in zumindest zwei verschiedenen Farben dargestellt werden. Hierzu könnte man Farbdisplays wählen, welche jedoch gegenüber Displays mit nur einer möglichen Displayfarbe wesentlich teurer sind. Deshalb hat man zur Farbumschaltung von Displays auch schon Lichtquellen unterschiedlicher Farbe vorgesehen, mit denen das Display durchleuchtet wird und die je nach der gewünschten Farbe umschaltbar sind. Wenn jedoch nur bestimmte Bereiche mit einer anderen Farbe erscheinen sollen, dann sind bei einer solchen Ausführung aufwendige Lichtkästen erforderlich, um die einzelnen, unterschiedlich farbig durchleuchteten Bereiche voneinander abzutrennen.

Es sind auch schon reflektive Farbdisplays - sogenannte ECB-Displays - bekannt, die durch Variation der Ansteuerspannung und einer daraus resultierenden Änderung des Brechungsindexes eine farbige Darstellung erlauben. Hierzu wird die Position der Polarisationsellipsen für die einzelnen Farben durch Verwendung von Retarderfolien mit einem angepassten Brechungsindex festgelegt. Nachteilig bei solchen Farbdisplays ist es, dass für manche Anwendungen keine ausreichend hohe Auflösung zu erreichen ist, um die erforderliche Informationsdichte zu verwirklichen.

Aus US-A-5 680 184 ist ein Verfahren gemäß Oberbegriff des Anspruchs 1 bekannt, bei dem zur Veränderung der Farbe der Anzeige die Ansteuerspannung der jeweils aktiven Flüssigkristallzelle so hoch gewählt wird, dass keine mit dem Auge wahrnehmbare Doppelbrechung in der angesteuerten Flüssigkristallzelle erfolgt und die Anzeige daher in der Eigenfarbe der anderen, nicht aktiven Flüssigkristallzelle erscheint.

Der Erfindung liegt das Problem zugrunde, ein Verfahren der eingangs genannten Art zu entwickeln, durch welches mit einer Flüssigkristallanzeige mit zwei hintereinander angeordneten Flüssigkristallzellen sich zwei unterschiedlich farbige Anzeigen zur gleichzeitigen Darstellung von zwei Displayfarben erreichen lassen, ohne dass hierzu unterschiedlich farbige Lichtquellen und entsprechende Lichtkästen erforderlich werden.

Bei dieser Verfahrensweise wird ein normalerweise bei DSTN-Zellen nicht erwünschter Effekt bewusst zur Umschaltung der Farbe der Darstellung benutzt. Dadurch kann man in vielen Fällen auf teure Farbdisplays verzichten und bei nicht farbigen Displays die Kosten für unterschiedlich farbige Lichtquellen und erforderliche Lichtkästen einsparen.

Erfindungsgemäß ist eine gleichzeitige Darstellung von zwei Displayfarben auf einer Flüssigkristallanzeige ist möglich, wenn von beiden Flüssigkristallzellen sich nicht überdeckende Anzeigebereiche mit überhöhter, eine Farbänderung herbeiführende Ansteuerspannung angesteuert werden.

Die Anzeige erscheint bei Ansteuerung mit Überspannung gelb, wenn man ein negatives DSTN-Display verwendet.

Auch eine blaue Anzeige ist möglich, indem man gemäß einer anderen Weiterbildung des erfindungsgemäßen Verfahrens ein positives DSTN-Display verwendet.

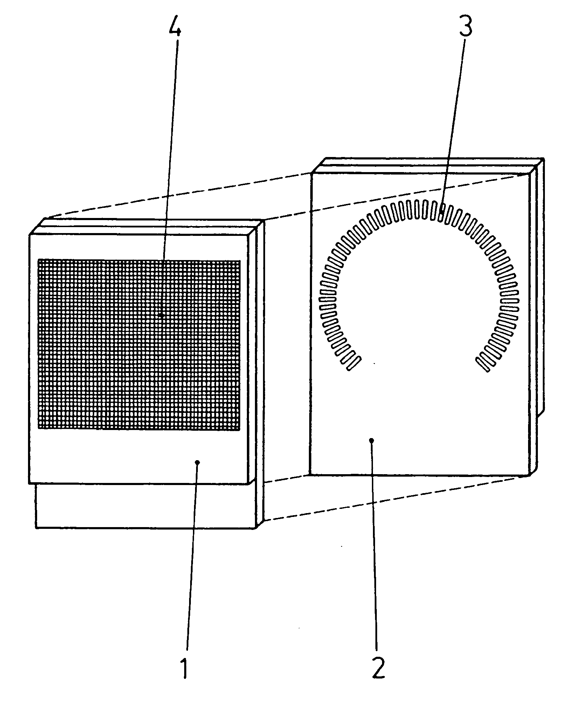

Zur weiteren Verdeutlichung des erfindungsgemäßen Verfahrens ist in der Zeichnung eine Flüssigkristallanzeige in Explosionsdarstellung wiedergegeben und wird nachfolgend erläutert.

Die Zeichnung zeigt eine negative DSTN-Zelle, die aus zwei aktiven Flüssigkristallzellen 1, 2 gebildet ist, bei denen die anzuzeigenden Bereiche bei Ansteuerung mit Normalspannung jeweils weiß und bei Ansteuerung mit Überspannung jeweils gelb erscheinen. Im zusammengebauten Zustand liegen beide Flüssigkristallzellen 1, 2 plan aufeinander. Die rückwärtige Flüssigkristallzelle 2 dient der Darstellung farbiger Segmente 3, während die erste Flüssigkristallzelle 1 zur Darstellung einer Dotmatrix 4 ausgebildet ist.

Verwendet man eine positive DSTN-Zelle, dann erscheinen die Anzeigen statt in gelb in blau.

## Patentansprüche

1. Verfahren zum Steuern einer Flüssigkristallanzeige, insbesondere in einem Kraftfahrzeug, mit zwei räumlich hintereinander angeordneten aktiven Flüssigkristallzellen, welche mit Durchlicht beleuchtet sind, wobei zur Veränderung der Farbe der Anzeige die Ansteuerspannung der jeweils aktiven Flüssigkristallzelle so hoch gewählt wird, dass keine mit dem Auge wahrnehmbare Doppelbrechung in der angesteuerten Flüssigkristallzelle erfolgt und die Anzeige daher in der Eigenfarbe der anderen, nicht aktiven Flüssigkristallzelle erscheint,
**dadurch gekennzeichnet, dass** zur gleichzeitigen Darstellung von zwei Displayfarben sich nicht überdeckende Anzeigebereiche der beiden Flüssigkristallzellen mit überhöhter, eine Farbänderung herbeiführende Ansteuerspannung angesteuert werden.

## Claims

1. Method of controlling a liquid crystal display, in particular in a motor vehicle, with two active liquid crystal cells which are arranged spatially one behind the other and are illuminated by transmitted light, wherein, in order to change the colour of the display, the drive voltage of the in each case active liquid crystal cell is selected to be so high that no birefringence which can be perceived by the eye occurs in the driven liquid crystal cell and the display therefore appears in the intrinsic colour of the other, non-active liquid crystal cell, **characterized in that**, in order to display two display colours at the same time, non-overlapping display regions of the two liquid crystal cells are driven with excessively high drive voltage which produces a colour change.

## Revendications

1. Procédé permettant de contrôler un affichage à cristaux liquides, notamment dans un véhicule automobile, lequel affichage comporte deux cellules actives à cristaux liquides disposées l'une derrière l'autre et traversées par de la lumière, où, pour modifier la couleur de l'affichage, on règle la tension de commande de la cellule à cristaux liquides qui est justement active sur une valeur suffisamment élevée pour qu'aucune biréfringence perceptible pour l'oeil humain ne se produise dans la cellule à cristaux liquides excitée et que, pour cette raison, l'affichage apparaît avec la couleur propre à l'autre cellule à cristaux liquides qui n'est pas active, **caractérisé par le fait que**, pour la représentation simultanée de deux couleurs sur l'écran, des zones d'affichage, qui ne se chevauchent pas, des deux cellules à cristaux liquides sont excitées à l'aide d'une tension de commande surélevée qui provoque une modification de couleur.
